# EUROPEAN PATENT SPECIFICATION

(11) **EP 2 966 651 B1**
(45) Date of publication and mention of the grant of the patent: **23.08.2017**
(21) Application number: 15175556.8
(22) Date of filing: 06.07.2015
(51) Int. Cl.: G21C 9/012, G21C 13/10, G21C 15/18, G21C 19/20, G21C 19/40, G21C 19/07

(54) **NUCLEAR POWER PLANT AND REMODELING METHOD THEREFOR**
KERNKRAFTANLAGE UND MODERNISIERUNGSVERFAHREN DAFÜR
CENTRALE NUCLÉAIRE ET SON PROCÉDÉ DE REMODELAGE

(30) Priority: 08.07.2014 JP 2014140180
(43) Date of publication of application: 13.01.2016
(73) Proprietor: Kabushiki Kaisha Toshiba, Minato-ku Tokyo 105-8001 (JP)
(72) Inventor: KAMEI, Kazuhiro, Tokyo 105-8001 (JP); UKAI, Makoto, Tokyo 105-8001 (JP)
(74) Representative: Awapatent AB

(56) References cited:
- EP-A1- 2 515 309
- EP-A2- 2 237 283
- DE-A1-102012 207 473
- JP-A- H0 273 195
- JP-A- 2002 341 078
- US-B1- 6 173 027

## Description

### BACKGROUND OF THE INVENTION

### Field of the Invention

The present invention relates to a nuclear power plant and a remodeling method for the nuclear power plant.

### Description of the Related Art

Generally, during normal operation, a boiling-water reactor plant (BWR plant) generates high-pressure steam using heat generated by fission of nuclear fuel placed in a reactor core, drives a steam turbine using the high-pressure steam, and rotates a generator directly connected to the steam turbine thereby to generate predetermined electric power. On the other hand, during an outage, maintenance, inspection, and servicing for components of a reactor system as well as the nuclear fuel and parts replacement work and the like are performed by shutting down the reactor system including the reactor core.

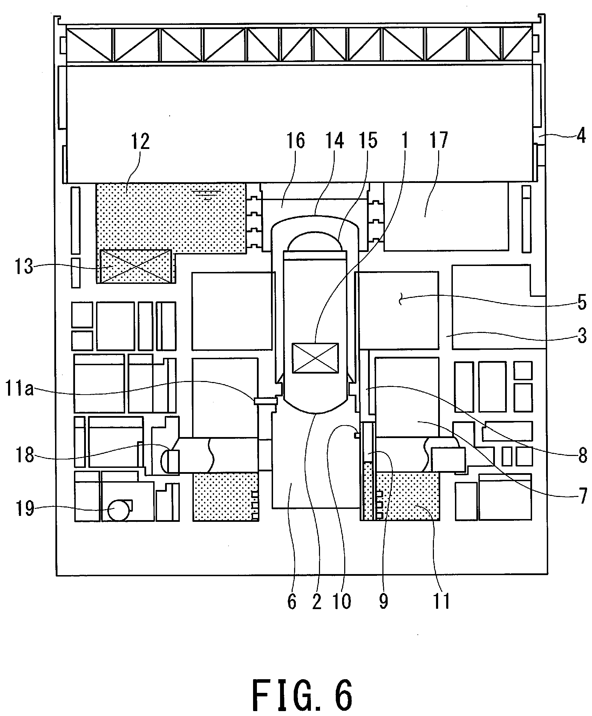

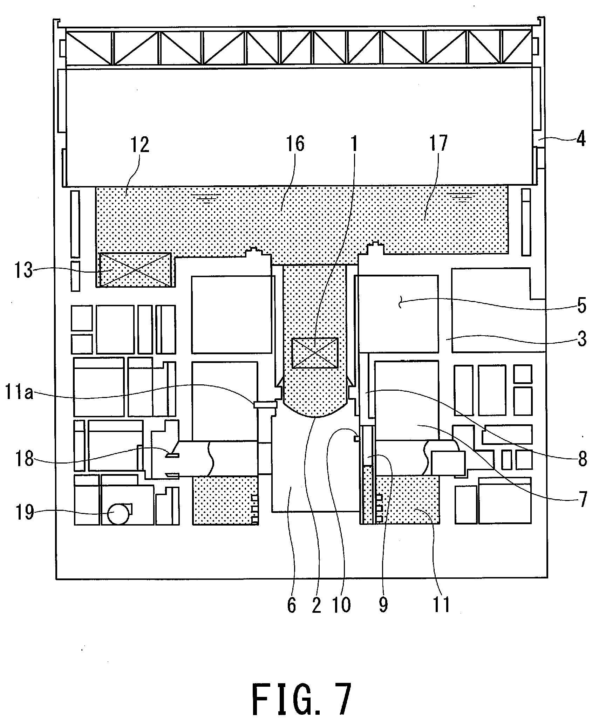

When the latest advanced BWR (hereinafter referred to as "ABWR") is taken as an example, states of a nuclear reactor building during normal operation and an outage of the boiling-water reactor plant described above are as shown in Figs. 6 and 7.

Fig. 6 shows a configuration of a nuclear reactor building during normal operation of the BWR. A reactor pressure vessel (hereinafter referred to as the "RPV") 2 which contains a reactor core 1 is placed in a center, serving as a boundary with a fluid containing radioactive substances. To provide against accidents in which the boundary is broken, releasing the fluid containing radioactive substances and suppress the release of radioactive substances into an environment whenever possible, a primary containment vessel (hereinafter referred to as the "PCV") 3 is placed so as to contain the RPV 2. Further, a nuclear reactor building 4 is placed so as to contain the PCV 3 and facilities necessary for safety and mitigation of accidents during normal operation of the nuclear power plant are provided there.

The PCV 3 is roughly divided into three areas: an upper dry well 5 (hereinafter referred to as the "upper D/W"), a lower dry well 6 (hereinafter referred to as the "lower D/W"), and a wet well 7 (hereinafter referred to as the "W/W"). A dry well comprises the upper D/W and the lower D/W. A part of the dry well, i.e. the most part of the lower D/W, is located lower than the reactor core 1.

Cavities of the upper D/W 5 and the lower D/W 6 are connected with each other via a dry well interconnecting duct 8. Further, the two wells, i.e., the D/W and W/W 7, are coupled to each other through a vent pipe 9 and a return line 10. A large amount of cooling water called a suppression pool 11 is accumulated in the W/W 7. An outlet of the vent pipe 9 is submerged in the suppression pool 11.

In case of a loss-of-coolant accident (hereinafter referred to as a "LOCA") in which a fluid (such as cooling water or the like) containing radioactive substances is released into the D/W, the fluid is released into the suppression pool 11 via the vent pipe 9 and condensed. This mechanism makes it possible to suppress pressure in the PCV 3 in case of a LOCA. Specifically, high-pressure steam and the like containing radioactive substances are supplied to the suppression pool 11 through the vent pipe 9 and washed free of the radioactive substances by pool water while being reduced in volume with the high-pressure steam and the like condensed.

Further, a vacuum breaker 11a is disposed between the cavity of the W/W 7 and the lower D/W 6 to allow passage only in one direction from the W/W 7 to the lower D/W 6. When pressure in the cavity of the D/W falls abnormally, the vacuum breaker 11a opens automatically, equalizing pressure between the cavity of the D/W and the cavity of the W/W 7.

Furthermore, spent fuel 13 which has completed its role as fuel is stored in a spent fuel pool (SFP) 12. The spent fuel 13, which is heated by decay heat, is stored under water to keep the spent fuel 13 cooled and provide a shield against radiation released from the spent fuel 13.

A state of a BWR such as described above at the time of an outage is shown in Fig. 7. In order to replace fuel in the reactor core 1 and inspect the RPV 2, a PCV head 14 and RPV head 15 shown as being attached in Fig. 6 are opened and a reactor well 16 and equipment pit 17 are filled with cooling water. In this case, the RPV 2 is interconnected with the reactor well 16, equipment pit 17, and spent fuel pool (SFP) 12 via water channels. Further, in order to carry in and out maintenance equipment for machines such as a control rod drive mechanism disposed at a bottom of the RPV 2, a lower D/W equipment hatch 18 with a single door is provided and is left open during a conventional outage.

In case of an accident in which a coolant flows out of RPV 2 in a state such as described above during the outage (hereinafter referred to as an "outage LOCA"), the reactor core 1 may get exposed and melt in a state in which the boundary of the PCV 3 is not maintained. In case of such a severe accident, there is a danger that radioactive substances will be released directly into the environment. Therefore, conventionally, makeup water facilities 19 capable of supplying large volumes of cooling water anytime are provided and kept on standby in and out of the nuclear reactor building even during outages.

Further, when the outage LOCA such as described above occurs, a water level in the spent fuel pool (SFP) 12 falls at the same time. In the SFP 12, even if water is drained from the side of the RPV 2, structurally, the water level stabilizes at a level higher than an upper end of the spent fuel 13. However, the cooling water held in the SFP 12 boils and evaporates due to the decay heat of the spent fuel 13, thereby to lower the water level and consequently exposing the fuel in a relatively short time. In this case again, there is a danger that radioactive substances are released directly into the environment as a result of fuel meltdown, so that it is necessary to keep the makeup water facilities 19 on standby.

JP 2002341078 A discloses an air lock equipment.

US 6173027 B1 discloses a primary containment vessel.

EP 2515309 A1 discloses a transient alleviation system of reactor.

DE 102012207473 A1 discloses a fuel pool of a nuclear power plant.

### Prior Art Reference

Patent Literature 1: JP2004-333357

### SUMMARY OF THE INVENTION

In a conventional boiling-water reactor plant (BWR plant), if a loss-of-coolant accident (LOCA) occurs during an outage carried out with the reactor stopped, it becomes necessary that the makeup water facilities 19 on standby are started to supply makeup water to the reactor pressure vessel (RPV) 2 and spent fuel pool (SFP) 12 and that the lower D/W equipment hatch 18 is closed by a field worker to prevent the coolant from flowing out of the system.

However, if a rate of outflow of the coolant from the RPV 2 exceeds water supply capacity of the makeup water facilities 19, or if the makeup water facilities 19 fail, or if a power supply for driving the makeup water facilities 19 is lost, or in a similar situation, evaporation of the coolant might make it impossible to keep the fuel in the reactor pressure vessel 2 and spent fuel pool (SFP) 12 covered with water for a long period of time.

Further, even if the makeup water facilities 19 start up normally, if an on-site closing operation of the lower D/W equipment hatch 18 is not performed in time, the cooling water flowing out from the bottom of the RPV 2 also flows out to the side of the nuclear reactor building 4 through the lower D/W equipment hatch 18.

In this case, even if a large amount of makeup water is supplied, the makeup water leaks to outside and flows through the lower D/W equipment hatch 18, and so it is also conceivable that a makeup water source will dry up, finally resulting in a loss of a makeup water supply function. It is also conceivable that the makeup water facilities 19 located in the nuclear reactor building 4 will be submerged in water, resulting in a loss of the makeup water supply function.

An object of the present invention is to provide a nuclear power plant and remodeling method therefor which can keep the reactor core and spent fuel covered with water based on a passive configuration of the nuclear power plant even if a serious event such as a loss-of-coolant accident (LOCA) or the like occurs during an outage of the nuclear power plant.

To achieve the above object, a nuclear power plant according to an embodiment of the present invention comprises a primary containment vessel comprising a dry well configured to be provided with an equipment at a level lower than a reactor core a plurality of doors, comprising at least an inner door and an outer door, provided at the primary containment vessel to access to the dry well; and an access tunnel provided between the inner door and the outer door, the access tunnel is configured to be able to carry the equipment in and out from the dry well at the level lower than the reactor core.

According to the nuclear power plant configured as described above, it becomes possible to keep the reactor core and spent fuel covered with water based on a passive configuration alone even if a serious event such as a loss-of-coolant accident (LOCA) or the like occurs during the outage.

### BRIEF DESCRIPTION OF THE DRAWINGS

Fig. 1 is sectional view showing a structure of a nuclear power plant according to a first embodiment of the present invention;
Fig. 2 is sectional view showing advantageous effects of the structure of the nuclear power plant according to the first embodiment of the present invention;
Fig. 3 is sectional view showing a structure of a nuclear power plant according to a second embodiment of the present invention;
Fig. 4 is sectional view showing a structure of a nuclear power plant according to a third embodiment of the present invention;
Fig. 5 is sectional view showing a structure of a nuclear power plant according to a fourth embodiment of the present invention;
Fig. 6 is sectional view showing an overall configuration of an advanced boiling-water reactor plant (ABWR) during normal operation; and
Fig. 7 is sectional view showing an overall configuration of the advanced boiling-water nuclear power plant (ABWR) during an outage.

### DETAILED DESCRIPTION OF THE PREFERRED EMBODIMENTS

A passive fuel flooding structure for use during an outage according to the present invention will be described below with reference to the following embodiments and accompanying drawings.

### (First embodiment)

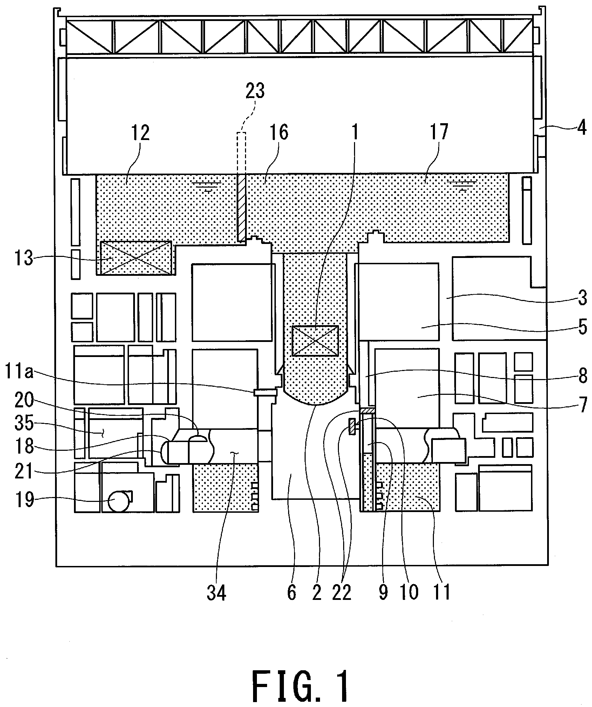

A configuration of a nuclear power plant according to this first embodiment is shown in Fig. 1. Equivalent elements described with reference to Figs. 6 and 7 are numbered with the same reference numbers and detailed explanations of those equivalent elements may be omitted.

According to this first embodiment, double doors (a plurality of doors) are provided on opposite ends of the lower D/W equipment hatch 18 as an access tunnel and made up of an inner door 20 and an outer door 21, where the lower D/W equipment hatch 18 (the access tunnel 18) is used to access a lower dry well from a nuclear reactor building and carry in and out equipment. The double doors are provided at the PCV 3 to access to the lower dry well at a level lower than the reactor core 1. A space between the inner door 20 and outer door 21 is formed to have a size large enough to accommodate the largest piece of equipment which is carried in and out. The interior space of the lower D/W equipment hatch 18 (the access tunnel 18), as well as the inner door and the outer door 21, is designed enough to carry in and out an equipment, which is typically larger than human body (e.g. larger than 2 meters in height or 1 meter in width). Further, in a vent pipe 9 and a return line 10 which connects a lower D/W 6 and a W/W 7, a shut-off device 22 is installed so as to close a flow channel in the vent pipe 9 and the return line 10 only during outages. This will be described concretely below.

An opening/closing door having a double structure, made up of two doors, i.e., the inner door 20 and outer door 21, is located in a lower D/W equipment hatch 18 serving as an access tunnel which can act as a coolant outflow route from a PCV 3 to a nuclear reactor building 4 in case a loss-of-coolant accident (LOCA) occurs during an outage. A space volume between the inner door 20 and outer door 21 is set to secure a length and volume large enough to carry in and out the largest, in size, of equipment maintenance facilities, such as a control rod drive mechanism, disposed at a bottom of an RPV 2.

The lower D/W equipment hatch 18 is connected to a lower D/W 6 through a lower D/W access tunnel 34. The lower D/W access tunnel 34 is a boundary between the D/W and the W/W 7.

The carrying in and out of the equipment maintenance facilities is performed through the lower D/W equipment hatch 18 and the lower D/W access tunnel 34, and transportation or the like of the facilities to a maintenance room 35 is performed. In the maintenance room 35, a maintenance operation of the facilities such as the control rod drive mechanism disposed at the bottom of the RPV 2, a reactor internal pump or the like is performed.

A shut-off device 22 serving as an outflow preventing unit is installed at an entrance to each of a vent pipe 9 and return line 10 connecting the upper D/W 5 and a lower D/W 6 with the W/W 7. In order not to obstruct a vent pipe function in case of a LOCA event during normal operation, the shut-off devices 22 are installed so as to close only during the outages. Specifically, the shut-off devices 22 are either installed at the start of the outage and removed away at the end of the outage or configured to have a function to close the entrance to the return line 10 only in case a LOCA event occurs during the outage. In the former case, it is conceivable, for example, to fix a structure such as a flange in a closed state. In the latter case, it is conceivable to use, for example, a mechanism made up of a combination of a float and a normally-open shut-off plate and configured to close based on buoyancy of the float when a water level of the lower D/W 6 rises. Besides, any of various mechanisms configured to close a flow channel can be adopted.

Furthermore, a self-closing gate (gravity-closing gate) 23 is provided, separating the spent fuel pool (SFP) 12 from a reactor well 16 and equipment pit 17. The self-closing gate 23 is structured to open the gate, thereby securing a water channel and thereby allowing mutual communication during an outage, and close the gate under its own weight based on a hinge mechanism when the water levels in the SFP 12 and reactor well 16 fall as a result of a loss-of-coolant accident. The self-closing gate 23 closes in response to some fall in the water level of the reactor well 16, making it possible to prevent pool water from flowing out of the spent fuel pool (SFP) 12 and secure the water level of the spent fuel pool (SFP) 12.

### (Operation)

In case a loss-of-coolant accident (LOCA) occurs during an outage, the passive fuel flooding structure according to the first embodiment configured as described above operates as follows.

If the outage LOCA occurs, causing the cooling water to flow out from the RPV 2 to the lower D/W 6, the water levels in the SFP 12, reactor well 16, and equipment pit 17 fall simultaneously. When the water level reaches a certain value, the self-closing gate 23 closes under its own weight, preventing a situation in which the water level of the SFP 12 alone falls, thereby making it possible to secure the cooling water in the spent fuel pool (SFP) 12 without loss and keep the stored spent fuel covered with water.

On the other hand, if coolant outflow from the RPV 2 further continues, the water levels of the reactor well 16 and the equipment pit 17 fall further, reaching the RPV 2. In so doing, the lower D/W equipment hatch 18 in the lower D/W 6 can be used with at least one of the inner door 20 and outer door 21 always closed, and thus it is possible to effectively prevent the water flown into the lower D/W 6 from flowing out to the side of the nuclear reactor building 4. Further, since the shut-off device 22 configured to close the flow channel in the vent pipe 9 and the return line 10 only during outages is installed on the side of the D/W, the shut-off device 22 can effectively prevent coolant outflow from the lower D/W 6 to the side of the W/W 7 and thereby limit a water-level fall in the RPV 2.

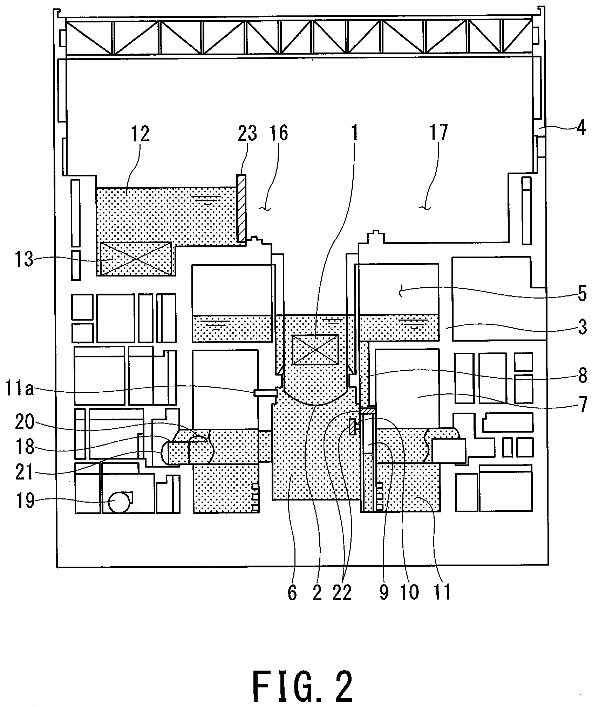

This first embodiment provides advantageous effects shown in Fig. 2. That is, the cooling water flowing out from the RPV 2 to the lower D/W 6 stays only in the lower D/W 6, upper D/W 5, and RPV 2, making it possible to passively keep a reactor core 1 covered with water using only supernatant water held in the reactor well 16, equipment pit 17, and SFP 12 at the time of an outage and water quantity (water volume) held in the RPV 2.

Further, in the SFP 12, a sufficient water level can be secured using operation and advantages of the self-closing gate 23. Also, reactor fuel can be kept covered with water without relying on dynamic makeup water facilities, thus greatly contributing to securing preparation time for makeup water facilities and prevention of reduction in makeup water capacity.

Furthermore, capability to prevent cooling water outflow to the nuclear reactor building 4 makes it possible to prevent various facilities in the nuclear reactor building, including a makeup water facilities 19, from being submerged in water and thereby achieve great advantageous effects from the viewpoint of protecting the makeup water facilities 19 and property.

### (Second embodiment)

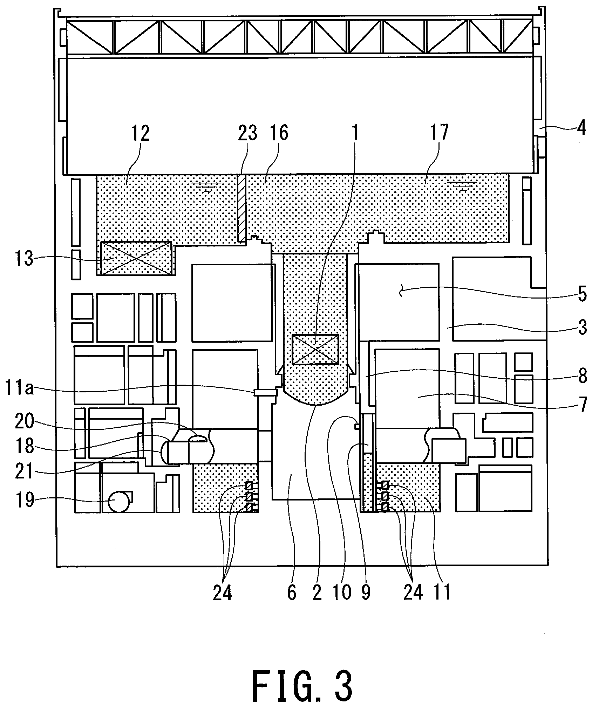

A configuration of a nuclear power plant according to this second embodiment is shown in Fig. 3.

In this second embodiment, the shut-off device 22 installed in the first embodiment is eliminated while on the other hand, a vent pipe outlet shut-off device 24 configured to close a flow channel of the vent pipe 9 only during outages is installed as an outflow prevention unit at an outlet of the vent pipe 9 connecting the lower D/W 6 with the W/W 7. Note that the same components as those in the first embodiment are denoted by the same reference numerals as the corresponding components in the first embodiment, and detailed description thereof will be omitted.

### (Operation)

Regarding operation of the passive fuel flooding structure according to the second embodiment configured as described above, the vent pipe outlet shut-off device 24 can effectively prevent outflow from the lower D/W 6 to the W/W 7 through the vent pipe 9.

### (Advantageous effects)

In addition to the advantageous effects of the first embodiment, the passive fuel flooding structure according to this second embodiment can effectively prevent outflow from the lower D/W 6 to the W/W 7 through the vent pipe 9 using the vent pipe outlet shut-off device 24.

### (Third embodiment)

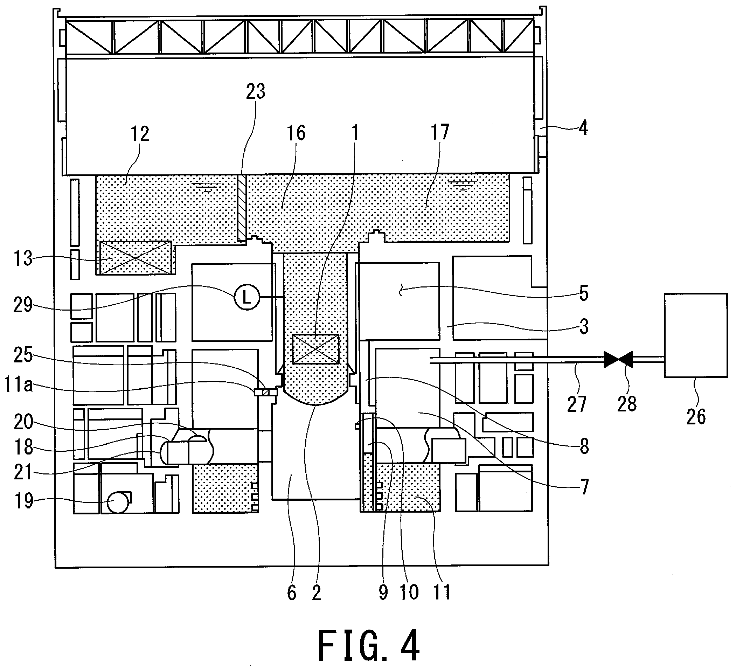

A configuration of a third embodiment is shown in Fig. 4.

In the configuration of this third embodiment, the shut-off device 22 installed in the first embodiment is eliminated while on the other hand, a closed-state locking device 25 is installed as an outflow prevention unit in a vacuum breaker 11a, an accumulator (compressed -air tank) 26, a compressed air supply line 27, and a compressed air supply valve 28 are connected to the W/W 7, and a reactor water level gauge 29 is added. Note that the same components as those in the first embodiment are denoted by the same reference numerals as the corresponding components in the first embodiment, and redundant description thereof will be omitted.

### (Operation)

Operation of the passive fuel flooding structure according to the third embodiment configured as described above is as follows. In case a loss-of-coolant accident (LOCA) or the like occurs during the outage, if it is detected by the reactor water level gauge 29 that the water level in the reactor pressure vessel (RPV) 2 has reached a predetermined water level, the compressed air supply valve 28 opens automatically. Then, the compressed air is supplied from the accumulator 26 to the W/W 7 via the compressed air supply line 27. The W/W 7 is pressurized by a supply of the compressed air, making it possible to effectively prevent cooling water from flowing out of the lower D/W 6 to the W/W 7.

Further, the closed-state locking device 25 of the vacuum breaker 11a can prevent air leakage from the pressurized W/W 7 to the lower D/W 6 and thereby prevent a pressure drop in the W/W 7.

### (Advantageous effects)

In this third embodiment, the W/W 7 is pressurized by a supply of compressed air, making it possible to effectively prevent cooling water from flowing out of the lower D/W 6 to the W/W 7. In addition, the closed-state locking device 25 of the vacuum breaker 11a can prevent air leakage from the pressurized W/W 7 to the lower D/W 6 and thereby prevent a pressure drop in the W/W 7. Also, the third embodiment provides advantageous effects similar to those of the first embodiment.

### (Fourth embodiment)

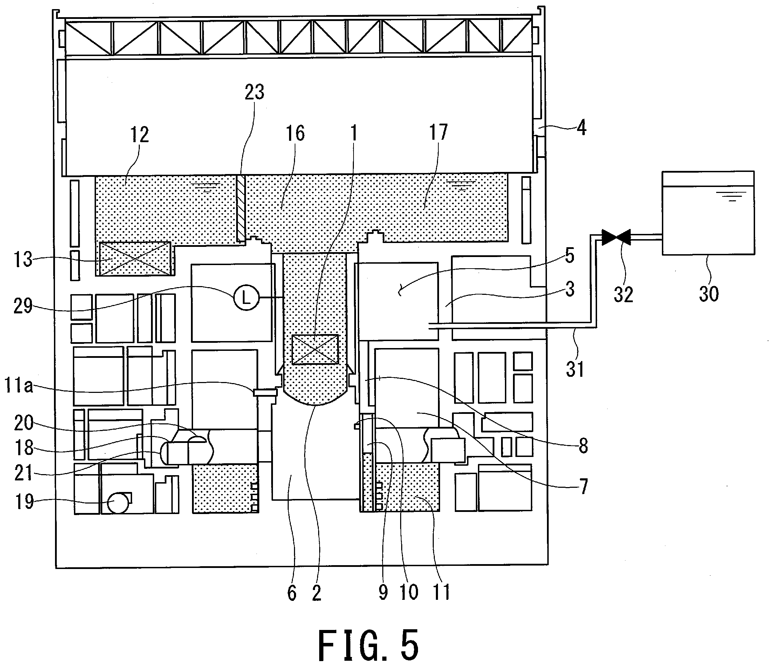

Next, a configuration of a fourth embodiment is shown in Fig. 5.

In this fourth embodiment, a water source tank 30, a gravity water feed line 31, a gravity water feed valve 32, and a reactor water level gauge 29 have been additionally disposed at levels higher the reactor core 1. Note that the same components as those in the first embodiment are denoted by the same reference numerals as the corresponding components in the first embodiment, and detailed description thereof will be omitted.

### (Operation)

Operation of the fourth embodiment is as follows. In case a loss-of-coolant accident (LOCA) or the like occurs during an outage, if it is detected by the reactor water level gauge 29 that the water level in the reactor pressure vessel (RPV) 2 has reached a predetermined water level, the gravity water feed valve 32 opens automatically. Then, water (makeup water) is supplied from the water source tank 30 into the PCV 3 via the gravity water feed line 31.

### (Advantageous effects)

In this fourth embodiment, water equal in quantity to the water flowing out from the lower D/W 6 to the W/W 7 can be supplied from the water source tank 30 located outside, making it possible to passively keep the reactor core 1 covered with water.

Whereas a few embodiments of the present invention have been described, these embodiments are presented only by way of example, and not intended to limit the scope of the present invention, which is defined in the appended claims.

Configurations described in different embodiments may be applied simultaneously to set up a configuration which can more reliably prevent water outflow from the lower D/W 6.

## Claims

1. A nuclear power plant, comprising:
a primary containment vessel (3) comprising a dry well (6) configured to be provided with an equipment at a level lower than a reactor core (1);
a plurality of doors (20,21), comprising at least an inner door (20) and an outer door (21), provided at the primary containment vessel (3) to access to the dry well (6);
the nuclear power plant being **characterized by** further comprising an access tunnel (34) provided between the inner door (20) and the outer door (21), the access tunnel (34) being configured to be able to carry the equipment in and out from the dry well (6) at the level lower than the reactor core (1),
wherein the plurality of doors (20, 21) and the access tunnel (34) are provided at the level lower than the reactor core (1).

2. The nuclear power plant according to claim 1, further comprising an outflow prevention unit (22) configured to prevent water in the dry well (6) from flowing out to a wet well (7).

3. The nuclear power plant according to claim 2, wherein the outflow prevention unit (22) is a shut-off device configured to close a flow channel of the dry well interconnecting duct on the side of the dry well (6).

4. The nuclear power plant according to claim 3, wherein
the shut-off device (22) includes a shut-off plate and a float, the shut-off plate being configured to close an opening of the dry well interconnecting duct on the side of the dry well (6), and
the shut-off device (22) is configured to close the opening with the shut-off plate at or higher than a predetermined water level of the dry well (6).

5. The nuclear power plant according to claim 2, wherein
the outflow prevention unit (22) includes: a closed-state locking device (25) installed on a vacuum breaker (11a) connecting the wet well (7) with the dry well (6) and adapted to lock the vacuum breaker (11a) in a closed state; a compressed air supply device (26) adapted to supply compressed air to the wet well (7); and a reactor water level gauge (29) adapted to measure a water level in a reactor pressure vessel (2), and
when the reactor water level gauge (29) detects that a predetermined water level has been reached, the compressed air supply device (26) supplies compressed air to the wet well (7).

6. The nuclear power plant according to claim 1, further comprising:
a water source tank (30) disposed at a level higher the reactor core (1);
a water feed line (31) configured to supply water from the water source tank (30) into the primary containment vessel (3); and
a reactor water level gauge (29) configured to measure a water level in a reactor pressure vessel (2), wherein
the water source tank (30) is configured to supply water to the primary containment vessel (3) at a predetermined level of the reactor water level gauge (29).

7. The nuclear power plant according to any one of claims 1 to 6, wherein a self-closing gate (23), adapted to remain open at a normal water level and close under its own weight when the water level falls to or below a predetermined value, is provided at a portion between a reactor well (16) and an equipment pit (17) that are interconnected to a spent fuel pool (12) via a water channel.

8. A remodeling method of a nuclear power plant comprising a primary containment vessel (3), a dry well (6) provided in the primary containment vessel (3) configured to be provided with an equipment at a level lower than a reactor core (1), the method comprising:
providing a plurality of doors, comprising an inner door (20) and an outer door (21) at the primary containment vessel (3) to access to the dry well (6); **characterized by** providing an access tunnel (34) between the inner door (20) and the outer door (21) configured to be able to carry the equipment in and out from the dry well (6) at the level lower than the reactor core (1); wherein the plurality of doors (20, 21) and the access tunnel (34) are provided at the level lower than the reactor core (1);
and providing an outflow prevention unit (22) configured to prevent water in the lower dry well (6) from flowing out to the wet well (7).

## Patentansprüche

1. Kernkraftwerk, **dadurch gekennzeichnet, dass** es umfasst:
einen primären Sicherheitsbehälter (3), der einen Reaktorraum (6) umfasst, welcher dafür ausgelegt ist, mit Ausrüstung auf einer niedrigeren Höhe als ein Reaktorkern (1) versehen zu werden;
mehrere Türen (20, 21), die mindestens eine Innentür (20) und eine Außentür (21) umfassen, die am Sicherheitsbehälter (3) zum Erreichen des Reaktorraums (6) vorgesehen sind;
wobei das Kernkraftwerk **dadurch gekennzeichnet ist, dass** es ferner umfasst:
einen Zugangstunnel (34), der zwischen der Innentür (20) und der Außentür (21) vorgesehen ist, wobei der Zugangstunnel (34) dafür ausgelegt ist, die Ausrüstung in den und aus dem Reaktorraum (6) auf einem Niveau transportieren zu können, das niedriger als der Reaktorkern (1) ist,
wobei die mehreren Türen (20, 21) und der Zugangstunnel (34) auf dem Niveau vorgesehen sind, das tiefer als der Reaktorkern (1) liegt.

2. Kernkraftwerk nach Anspruch 1, das ferner eine Abflusspräventionseinheit (22) umfasst, die dafür ausgelegt ist, Wasser im Reaktorraum (6) am Abfließen in einen Pumpwerksumpf (7) zu hindern.

3. Kernkraftwerk nach Anspruch 2, wobei die Abflusspräventionseinheit (22) eine Absperrvorrichtung ist, die dafür ausgelegt ist, einen Strömungskanal des Reaktorraum-Verbindungskanals auf der Seite des Reaktorraums (6) zu verschließen.

4. Kernkraftwerk nach Anspruch 3, wobei die Absperrvorrichtung (22) eine Absperrplatte und einen Schwimmer umfasst, wobei die Absperrplatte dafür ausgelegt ist, eine Öffnung des Reaktorraum-Verbindungskanals auf der Seite des Reaktorraum (6) zu verschließen, und die Absperrvorrichtung (22) dafür ausgelegt ist, die Öffnung mit der Absperrplatte beim vorgegebenen Wasserniveau des Reaktorraums (6) oder bei einem höheren Niveau zu verschließen.

5. Kernkraftwerk nach Anspruch 2, wobei
die Abflusspräventionseinheit (22) umfasst: eine Sperrvorrichtung (25) im geschlossenen Zustand, die an einem Vakuumschalter (11a) installiert ist, der den Pumpwerksumpf (7) mit dem Reaktorraum (6) verbindet und dafür ausgelegt ist, den Vakuumschalter (11a) in einem geschlossenen Zustand zu verriegeln; eine Druckluftzufuhrvorrichtung (26), die dafür ausgelegt ist, Druckluft dem Pumpwerksumpf (7) zuzuführen; und ein Reaktorwasserpegelmessgerät (29), das dafür ausgelegt ist, einen Wasserpegel in einem Reaktordruckgefäß (2) zu messen, und
wenn das Reaktorwasserpegelmessgerät (29) feststellt, dass ein vorgegebener Wasserpegel erreicht worden ist, führt die Druckluftzufuhrvorrichtung (26) dem Pumpwerksumpf (7) Druckluft zu.

6. Kernkraftwerk nach Anspruch 1, das ferner umfasst: einen Wasservorratsbehälter (30), der auf einem höheren Niveau als der Reaktorkern (1) angeordnet ist;
eine Wasserzufuhrleitung (31), die zum Zuführen von Wasser aus dem Wasservorratsbehälter (30) zum primären Sicherheitsbehälter (3) ausgelegt ist; und
ein Reaktorwasserpegelmessgerät (29), das zum Messen eines Wasserpegels in einem Reaktordruckgefäß (2) ausgelegt ist, wobei
der Wasservorratstank (30) zum Zuführen von Wasser zum primären Sicherheitsbehälter (3) bei einem vorgegebenen Pegel des Reaktorwasserpegelmessgerätes (29) ausgelegt ist.

7. Kernkraftwerk nach einem der Ansprüche 1 bis 6, wobei ein selbstschließendes Tor (23), das zum Offenbleiben bei einem normalen Wasserpegel und zum Schließen unter seinem eigenen Gewicht, wenn der Wasserpegel auf oder unter einen vorgegebenen Wert fällt, ausgelegt ist, an einem Bereich zwischen einem Reaktorraum (16) und einer Ausrüstungsgrube (17) vorgesehen ist, die miteinander mit einem Pool für verbrauchten Brennstoff (12) über einen Wasserkanal verbunden sind.

8. Umgestaltungsverfahren für ein Kernkraftwerk, das einen primären Sicherheitsbehälter (3), einen Reaktorraum (6), der im primären Sicherheitsbehälter (3) vorgesehen ist, der dafür ausgelegt ist, mit Ausrüstung auf einem Niveau ausgerüstet zu werden, das niedriger als ein Reaktorkern (1) ist, wobei das Verfahren umfasst:
Bereitstellen von mehreren Türen, die eine Innentür (20) und eine Außentür (21) am primären Sicherheitsbehälter (3) für den Zugang zum Reaktorraum (6) umfassen;
**gekennzeichnet durch** Bereitstellen eines Zugangstunnels (34) zwischen der Innentür (20) und der Außentür (21), wobei der Zugangstunnel (34) dafür ausgelegt ist, die Ausrüstung in die und aus dem Reaktorraum (6) auf einem Niveau transportieren zu können, das niedriger als der Reaktorkern (1) ist;
wobei die mehreren Türen (20, 21) und der Zugangstunnel (34) auf dem Niveau vorgesehen sind, das tiefer als der Reaktorkern (1) liegt;
und durch Bereitstellen einer Abflusspräventionseinheit (22), die dafür ausgelegt ist, das Abfließen von Wasser aus dem unteren Reaktorraum (6) in den Pumpwerksumpf (7) zu verhindern.

## Revendications

1. Centrale nucléaire comprenant :
une cuve de confinement primaire (3) comprenant un puits sec (6) configuré pour être doté d'un équipement à un niveau plus bas qu'un noyau de réacteur (1) ;
une pluralité de portes (20, 21) comprenant au moins une porte interne (20) et une porte externe (21), prévues sur la cuve de confinement primaire (3) pour accéder au puits sec (6) ;
la centrale nucléaire étant **caractérisée en ce qu'**elle comprend en outre
un tunnel d'accès (34) prévu entre la porte interne (20) et la porte externe (21), le tunnel d'accès (34) étant configuré de manière à pouvoir transporter l'équipement vers l'intérieur du puits sec (6) et hors de celui-ci au niveau plus bas que le noyau de réacteur (1),
dans laquelle la pluralité de portes (20, 21) et le tunnel d'accès (34) sont installés au niveau plus bas que le noyau de réacteur (1).

2. Centrale nucléaire selon la revendication 1, comprenant en outre une unité de prévention de fuites (22) configurée pour empêcher l'eau dans le puits sec (6) de s'écouler vers un puits humide (7).

3. Centrale nucléaire selon la revendication 2, dans laquelle
l'unité de prévention de fuites (22) est un dispositif de fermeture configuré pour fermer un canal d'écoulement du conduit d'interconnexion du puits sec du côté du puits sec (6).

4. Centrale nucléaire selon la revendication 3,
dans laquelle le dispositif de fermeture (22) comprend un clapet et un flotteur, le clapet étant configuré pour fermer une ouverture du conduit d'interconnexion du puits sec du côté du puits sec (6), et
le dispositif de fermeture (22) est configuré pour fermer l'ouverture avec le clapet à un niveau d'eau prédéterminé du puits sec (6) ou au-dessus de celui-ci.

5. Centrale nucléaire selon la revendication 2, dans laquelle
l'unité de prévention de fuites (22) comprend : un dispositif de verrouillage dans l'état fermé (25) installé sur un casse-vide (11 a) reliant le puits humide (7) au puits sec (6) et adapté pour verrouiller le casse-vide (11 a) dans un état fermé ; un dispositif d'alimentation en air comprimé (26) adapté pour alimenter de l'air comprimé vers le puits humide (7) ; et un capteur de niveau d'eau de réacteur (29) adapté pour mesurer un niveau d'eau dans une cuve sous pression de réacteur (2), et
lorsque le capteur de niveau d'eau de réacteur (29) détecte qu'un niveau d'eau prédéterminé a été atteint, le dispositif d'alimentation en air comprimé (26) fournit de l'air comprimé au puits humide (7).

6. Centrale nucléaire selon la revendication 1, comprenant en outre :
un réservoir de source d'eau (30) disposé à un niveau plus élevé que le noyau de réacteur (1) ;
une ligne d'alimentation en eau (31) configurée pour alimenter de l'eau à partir du réservoir de source d'eau (30) vers la cuve de confinement primaire (3) ; et
un capteur de niveau d'eau de réacteur (29) configuré pour mesurer un niveau d'eau dans une cuve sous pression de réacteur (2) ; dans laquelle
le réservoir de source d'eau (30) est configuré pour fournir de l'eau à la cuve de confinement primaire (3) à un niveau prédéterminé du capteur de niveau d'eau de réacteur (29).

7. Centrale nucléaire selon l'une quelconque des revendications 1 à 6, dans laquelle une barrière à fermeture automatique (23), adaptée pour rester ouverte à un niveau d'eau normal et pour se fermer sous son propre poids lorsque le niveau d'eau baisse à une valeur prédéterminée ou en dessous de celle-ci, est prévue dans une partie située entre un puits de réacteur (16) et une fosse à équipement (17), lesquels sont reliés à un bassin de combustible usé (12) par le biais d'un canal d'eau.

8. Procédé de remodelage d'une centrale nucléaire comprenant une cuve de confinement primaire (3), un puits sec (6) prévu dans la cuve de confinement primaire (3) et configuré pour être doté d'un équipement à un niveau plus bas qu'un noyau de réacteur (1), le procédé comprenant :
la mise à disposition d'une pluralité de portes comprenant une porte interne (20) et une porte externe (21) sur la cuve de confinement primaire (3) pour l'accès au puits sec (6) ;
**caractérisé par**
la mise à disposition d'un tunnel d'accès (34) entre la porte interne (20) et la porte externe (21), configuré de manière à pouvoir transporter l'équipement vers l'intérieur du puits sec (6) et hors de celui-ci au niveau plus bas que le noyau de réacteur (1) ;
dans lequel la pluralité de portes (20, 21) et le tunnel d'accès (34) sont prévus au niveau plus bas que le noyau de réacteur (1) ; et
la mise à disposition d'une unité de prévention de fuites (22) configurée pour empêcher l'eau dans le puits sec (6) de s'écouler vers le puits humide (7).
